# EUROPEAN PATENT APPLICATION

(11) **EP 4 439 069 A1**
(43) Date of publication of application: **02.10.2024**
(21) Application number: 22914582.6
(22) Date of filing: 23.12.2022
(51) Int. Cl.: G01N 35/00, G01N 35/04

(54) **SAMPLE LOADING AND UNLOADING SYSTEM FOR LABORATORY ASSEMBLY LINE**

(30) Priority: 29.12.2021 CN 202111636851; 29.12.2021 CN 202123363569 U
(71) Applicant: Autobio Labtec Instruments Co., Ltd., Zhengzhou, Henan 450016 (CN)
(72) Inventor: XU, Can, Zhengzhou, Henan 450016 (CN); ZHAO, Peng, Zhengzhou, Henan 450016 (CN); XU, Zhenya, Zhengzhou, Henan 450016 (CN); LEI, Yafei, Zhengzhou, Henan 450016 (CN); XU, Zhenying, Zhengzhou, Henan 450016 (CN); WU, Baojun, Zhengzhou, Henan 450016 (CN); ZHU, Zhiguang, Zhengzhou, Henan 450016 (CN); HOU, Jianping, Zhengzhou, Henan 450016 (CN); WANG, Chao, Zhengzhou, Henan 450016 (CN); LIU, Cong, Zhengzhou, Henan 450016 (CN)
(74) Representative: V.O.
(86) International application number: PCT/CN2022/141645
(87) International publication number: WO 2023/125328

(57) **Abstract**

A sample loading and unloading system for a laboratory assembly line, comprising a sample holder transmission track module and a sample tube loading and unloading module (7), wherein the sample holder transmission track module comprises a main track (3) and at least one auxiliary track (4) in parallel communication with the main track (3); a material distribution detection station (8) is arranged on the main track (3); an auxiliary detection station (11) and a feeding and scanning station (13) are sequentially arranged on the auxiliary track (4) along a transmission direction; the place of connection of an input end of the auxiliary track (4) and the main track (3) is located downstream of the material distribution detection station (8), and is provided with a direction-changing component (9) used for changing the transmission direction of a sample holder, and the sample tube loading and unloading module (7) comprises sample inlet and outlet regions (19) and an error region (6). According to the sample loading and unloading system, rapid sample feeding and rapid sample discharge of a sample tube may be achieved, thus preventing the main track (3) from frequently being stopped, reducing the waiting time of a device, and increasing the operation efficiency. Meanwhile, the sample tube loading and unloading module (7) is provided with an error region (6), thereby facilitating the manual processing of faulty sample tubes, and increasing the sample transmission efficiency and the space utilization rate.

## Description

This application claims the priority to Chinese patent application No. 202111636851.1, titled "SAMPLE LOADING AND UNLOADING SYSTEM FOR LABORATORY ASSEMBLY LINE", filed on December 29, 2021 with the China National Intellectual Property Administration, and Chinese patent application No. CN202123363569.9, titled "SAMPLE LOADING AND UNLOADING SYSTEM FOR LABORATORY ASSEMBLY LINE", filed on December 29, 2021 with the China National Intellectual Property Administration, the entire disclosures thereof are incorporated herein by reference.

### FIELD

The present disclosure relates to the field of medical laboratory equipment, and in particular to a sample loading and unloading system for a laboratory workflow.

### BACKGROUND

With the improvement of modern medical testing level, increasing attention is paid to accurate medical testing, more and more samples are to be tested in hospitals, and traditional single testing instruments cannot meet the needs of medical institutions. Laboratory workflow connecting various medical analyzing instruments and processing samples before and after analysis are getting more and more popular.

Currently, the laboratory workflow adopts rack type conveying or single sample holder conveying to realize sample conveying. For the single sample holder conveying workflow, sample loading system or unloading system does not have an error sample management area or an error area is provided on a conveying track. During processing of an error sample, operation of equipment has to be suspended and the sample has to be manually taken out from the conveying module for processing, the operation is cumbersome, resulting in low efficiency of sample conveying.

Therefore, a technical problem to be solved by those skilled in the art is to provide suitable arrangement of the sample loading and unloading system for laboratory workflow, to facilitate processing of the error samples, so as to improve efficiency of sample conveying.

### SUMMARY

In view of this, a sample loading and unloading system for laboratory workflow is provided in the present disclosure to optimize space arrangement, facilitate processing of error samples, and improve efficiency of sample conveying as well as space utilization.

To achieve the above object, the present disclosure provides the following technical solutions.

A sample loading and unloading system for a laboratory workflow includes a sample holder conveying track module and a sample tube loading and unloading module. The sample holder conveying track module includes a main track and at least one auxiliary track arranged side by side with the main track and in communication with the main track. The main track is provided with a distribution detection position, and the auxiliary track is provided with an auxiliary detection position and an entered sample scanning position in sequence along a conveying direction. A connection position between an input end of the auxiliary track and the main track is located downstream of the distribution detection position and is provided with a diversion mechanism for changing the conveying direction of a sample holder. The sample tube loading and unloading module includes a sample entering and leaving area and an error area.

Preferably, a portion of the auxiliary track located downstream of the entered sample scanning position is an error sample holder track, one side of the error sample holder track is in communication with the main track via a connecting track, and another diversion mechanism is provided at a connection position between the error sample holder track and the connecting track.

Preferably, the error sample holder track is provided with an error sample holder temporary storage position.

Preferably, the distribution detection position is provided with a sample holder position sensor and a sample holder information reader, the auxiliary detection position is provided with a sample holder position sensor, a sample holder information reader, and a sample tube position sensor, and the entered sample scanning position is provided with a sample holder position sensor, a sample holder information reader, and a sample tube information reader.

Preferably, the main track is provided with a main track buffer position located between the input end and an output end of the auxiliary track, and the main track buffer position is provided with a sample holder position sensor.

Preferably, the entered sample scanning position is provided with a sample holder rotating device.

Preferably, the sample holder rotating device includes at least one driving wheel and at least one driven wheel arranged in sequence along a circumferential direction of the sample holder for rolling contact with a circumferential outer wall of the sample holder. The sample holder rotating device further includes a rotation driving device for driving the driving wheel to rotate and a movement driving device for changing a position of the driving wheel and/or a position of the driven wheel relative to the auxiliary track.

Preferably, the error area includes an error sample area and a manual processing area.

Preferably, the sample entering and leaving area is provided with at least one tray placement position for placing a sample tray, and the tray placement position is provided with a sample tray information detecting device.

Preferably, the diversion mechanism includes a blocking arm for restricting passage of the sample holder and a diversion driving component for driving the blocking arm to change position between two adjacent tracks.

Preferably, the auxiliary track is arranged at one side of the main track and is parallel to the main track, and a conveying direction of the auxiliary track is the same as that of the main track.

Preferably, the main track is provided with a position detecting device for sample holder release located downstream of an output end of the auxiliary track;
and/or, the auxiliary track is provided with a position detecting device for auxiliary track buffer occupation located upstream of the auxiliary detection position;
and/or, the auxiliary track is provided with a position detecting device for scanning position buffer occupation located between the auxiliary detection position and the entered sample scanning position.

Preferably, the main track is provided with a main track buffer position located between the input end and the output end of the auxiliary track, and a position detecting device for main track buffer occupation located between the input end of the auxiliary track and the main track buffer position.

Preferably, the sample holder conveying track module further includes a return track provided at one side of the main track and has a conveying direction opposite to that of the main track, and the sample holder conveying track module further includes a vacant holder return track located below the main track and configured to convey a vacant sample holder.

Preferably, the sample loading and unloading system of the laboratory workflow further includes a sample tube transfer module configured to transfer a sample tube between the sample holder conveying track module and the sample tube loading and unloading module.

The present disclosure provides a sample loading and unloading system for a laboratory workflow, including a sample holder conveying track module and a sample tube loading and unloading module. The sample holder conveying track module includes a main track and at least one auxiliary track arranged side by side with the main track and in communication with the main track. The main track is provided with a distribution detection position, and the auxiliary track is provided with an auxiliary detection position and an entered sample scanning position arranged in sequence along the conveying direction. A connection position between the input end of the auxiliary track and the main track is located downstream of the distribution detection position and is provided with the diversion mechanism for changing the conveying direction of a sample holder. The sample tube loading and unloading module includes a sample entering and leaving area and an error area.

The operation principle of the sample loading and unloading system according to the present disclosure is as follows.

In a sample loading mode, the distribution detection position of the main track detects each sample holder conveyed on the main track, and the system determines whether sample loading is required for each sample holder based on detection information of the distribution detection position. In the case that a sample holder does not require sample loading, the distribution detection position directly releases the sample holder and the sample holder is conveyed to a next unit by the main track. In the case that a sample holder requires sample loading, the sample holder is conveyed to the auxiliary track by the diversion mechanism, where in the case that no sample tube is detected on the sample holder by the auxiliary detection position, i.e., the sample holder is vacant, a sample tube in the sample entering and leaving area is transferred to the vacant sample holder; then, the auxiliary detection position releases the sample holder and the sample holder is conveyed to the entered sample scanning position, which binds and uploads the scanned sample tube information with sample holder information, and then the sample holder is released, thus completing loading of the sample tube once.

In a sample unloading mode, the distribution detection position detects each sample holder conveyed on the main track, and the system determines whether sample unloading is required for each sample holder based on detection information of the distribution detection position. In the case that a sample holder does not require sample unloading, the distribution detection position directly releases the sample holder and the sample holder is conveyed to the next unit by the main track. In the case that a sample holder requires sample unloading, the sample holder is conveyed to the auxiliary track by the diversion mechanism, where in the case that a sample tube is detected on the sample holder by the auxiliary detection position, the sample tube is transferred to the sample entering and leaving area; then, the auxiliary detection position releases the sample holder and the sample holder is conveyed to the entered sample scanning position, and the sample holder is released by the entered sample scanning position and conveyed to the next unit via the main track, thus completing unloading of the sample tube once.

In a retest loading mode, if a sample tube that has entered into the sample entering and leaving area needs to enter the system again for to be tested and analyzed, the sample tube may be placed onto a vacant sample holder in the entered sample scanning position. The entered sample scanning position binds and uploads scanned sample tube information with scanned sample holder information, and then releases the sample holder carrying the sample tube to allow the sample tube to be conveyed to the next unit via the main track, thus completing sample tube retest loading once.

In an error sample processing mode, after a sample tube (or a retest sample tube) is loaded onto a vacant sample holder normally in the auxiliary detection position, when sample tube information is scanned and read by the entered sample scanning position, if information cannot be scanned or the scanned information does not correspond to experimental items, the system determines that the sample tube is an error information sample tube. In this case, the error information sample tube is conveyed into the error area for manual processing, and the sample tube after manual processing is then operated in accordance with the above sample loading mode (or retest loading mode), thereby realizing normal sample loading (or normal retest loading). If the distribution detection position fails to read the sample holder information or the read sample holder information is incorrect when the sample holder is conveyed to the distribution detection position of the main track, the sample holder is conveyed to the auxiliary track by the diversion mechanism. Meanwhile, the system may also send an alert to facilitate timely manual processing of the error information sample holder. The error area of the sample tube loading and unloading module may be used as a sample entering area for expedited sample holders, to facilitate loading processing of a small number of expedited sample holders.

In a sample loading and unloading integrated mode, the system may divide the sample entering and leaving area of the sample tube loading and unloading module into a sample entering area and a sample leaving area, where the sample entering area is used to place the sample tray carrying sample tubes and the sample leaving area is used to place a vacant sample tray. In this mode, when a sample holder is conveyed to the auxiliary detection position, if a vacant sample holder is detected by the auxiliary detection position, a sample tube in the sample entering area may be conveyed to the vacant sample holder, and the entered sample scanning position binds and uploads sample tube information and sample holder information, thereby realizing loading of the sample tube. If a sample holder carrying a sample tube is detected by the auxiliary detection position, the system unbinds sample holder information from sample tube information and transfers the sample tube onto the sample tray in the sample leaving area, and the auxiliary detection position releases the vacant sample holder, thereby completing unloading of the sample tube once. The vacant sample holder is temporarily stored between the auxiliary detection position and the entered sample scanning position; if loading of the sample tube is required in this situation, temporarily stored the sample tube from the sample entering area to the vacant sample holder, then the entered sample scanning position binds and uploads the scanned sample tube information with the scanned sample holder information, and the sample holder is conveyed to the next unit by the main track, thus completing loading of the sample tube once.

The following beneficial effects are realized according to the present disclosure.
(1) The sample loading and unloading system provided in the present solution may serve as a sample loading unit, a sample unloading unit, or an integrated sample loading and unloading unit for laboratory workflow, which can meet high-throughput and high-capacity processing requirements for large medical institutions, and also meet space-compact and low-cost requirements for small medical institutions.
(2) The main track and the auxiliary track of the sample holder conveying track module in the present solution are connected side by side, which can ensure that scheduling of the sample holder is not affected by the sample tube transfer module when multiple units are in parallel operation, so as to realize rapid input or output of sample tubes, which avoids frequent stopping of the main track, reduces waiting time of equipment, thereby enhancing equipment throughput of the whole system and improving operational efficiency.
(3) The sample tube loading and unloading module of the present solution is provided with the error area 6, which facilitates manual processing of error sample tubes, and may also serve as an expedited loading passage for expedited sample tubes, thereby improving sample transfer efficiency and space utilization rate.

### BRIEF DESCRIPTION OF THE DRAWINGS

For more clearly illustrating embodiments of the present disclosure or technical solutions in the conventional technology, drawings referred to for describing the embodiments or the conventional technology will be briefly described hereinafter. Apparently, the drawings in the following description are only some embodiments of the present disclosure, and for those skilled in the art, other drawings may be obtained based on these drawings without any creative efforts.
FIG. 1 is a schematic view showing the overall structure of a sample loading and unloading system according to a specific embodiment of the present disclosure;
FIG. 2 is a top schematic view showing the structure of a first type of sample holder conveying track module and a sample tube loading and unloading module according to a specific embodiment of the present disclosure;
FIG. 3 is a schematic view showing the structure of the first type of sample holder conveying track module according to the specific embodiment of the present disclosure;
FIG. 4 is a top schematic view showing the structure of a second type of sample holder conveying track module and a sample tube loading and unloading module according to a specific embodiment of the present disclosure; and
FIG. 5 is a schematic view showing the structure of the second type of sample holder conveying track module according to the specific embodiment of the present disclosure.

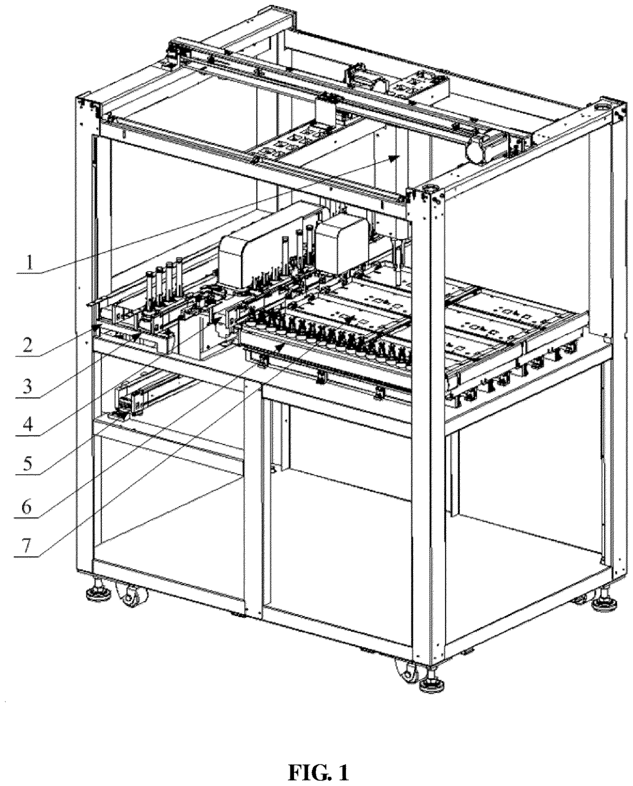

Reference numerals in FIGS. 1 to 5:

| | | | |
|---|---|---|---|
| 1 | sample tube transfer module, | 2 | return track, |
| 3 | main track, | 4 | auxiliary track, |
| 5 | vacant holder return track, | 6 | error area, |
| 7 | sample tube loading and unloading module,8 | | distribution detection position, |
| 9 | first diversion mechanism, | | |
| 10 | position detecting device for main track buffer occupation, | | |
| 11 | auxiliary detection position, | 12 | sample tube information reader, |
| 13 | entered sample scanning position, | 14 | main track buffer position, |
| 15 | position detecting device for sample holder | | release, |
| 16 | sample holder rotating device, | | |
| 17 | position detecting device for scanning position buffer occupation, | | |
| 18 | manual processing area, | 19 | sample entering and leaving area, |
| 20 | error sample area, | | |
| 21 | position detecting device for auxiliary track buffer occupation, | | |
| 22 | error sample holder track, | 23 | second diversion mechanism, |
| 24 | error sample holder temporary storage position. | | |

### DETAILED DESCRIPTION OF THE EMBODIMENTS

Technical solutions of the embodiments of the present disclosure are clearly and completely described hereinafter in conjunction with the drawings of the embodiments of the present disclosure. Apparently, the embodiments described in the following are only some embodiments of the present disclosure, rather than all embodiments. Any other embodiments obtained by those skilled in the art based on the embodiments in the present disclosure without any creative work fall in the scope of protection of the present disclosure.

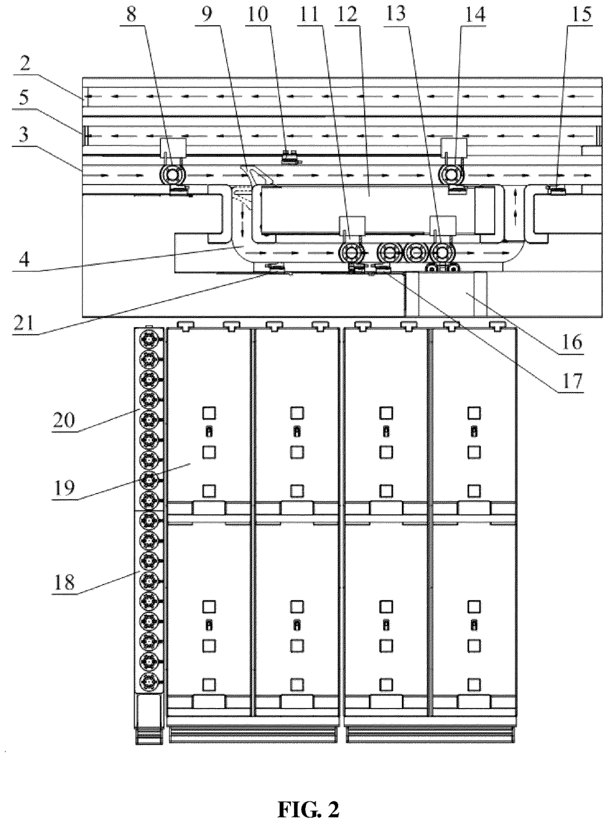

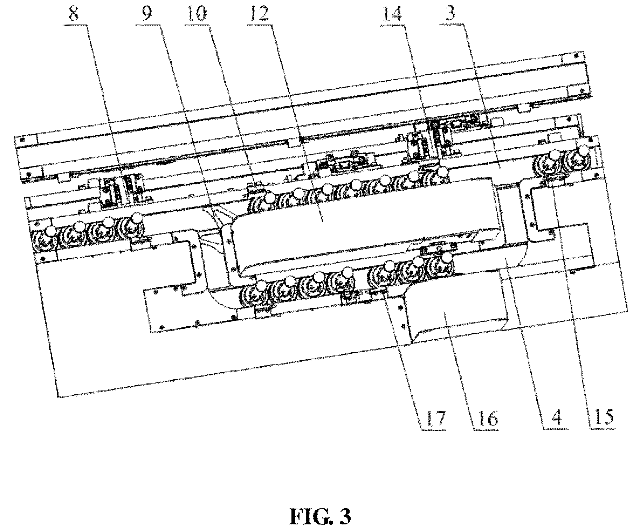

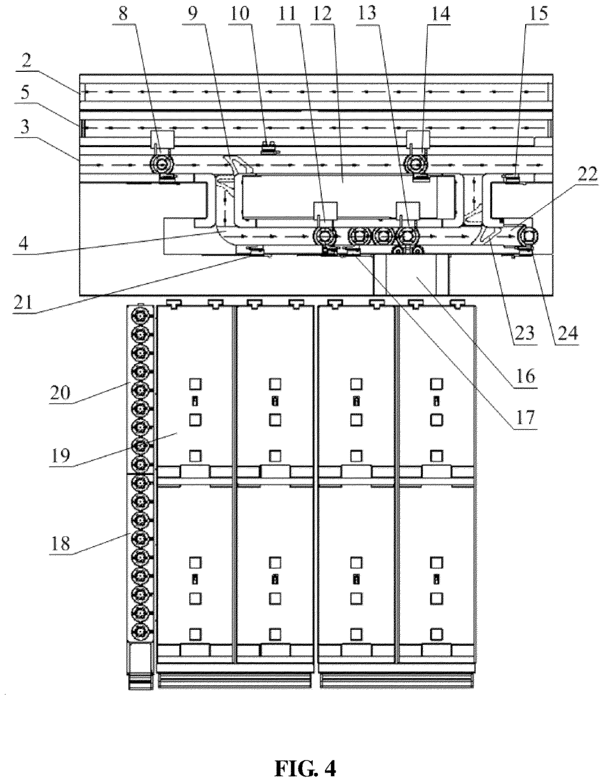

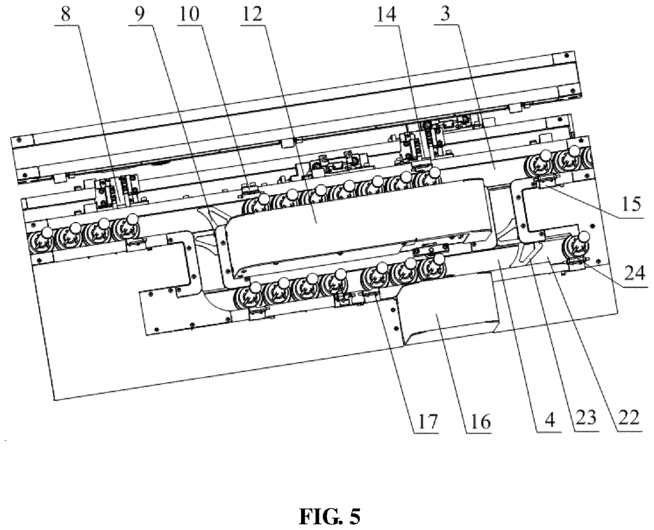

Referring to FIGS. 1 to 5, FIG. 1 is a schematic view showing the overall structure of a sample loading and unloading system according to a specific embodiment of the present disclosure; FIG. 2 is a top schematic view showing the structure of a first type of sample holder conveying track module and a sample tube loading and unloading module according to a specific embodiment of the present disclosure; FIG. 3 is a schematic view showing the structure of the first type of sample holder conveying track module according to the specific embodiment of the present disclosure; FIG. 4 is a top schematic view showing the structure of a second type of sample holder conveying track module and a sample tube loading and unloading module according to a specific embodiment of the present disclosure; FIG. 5 is a schematic view showing the structure of the second type of sample holder conveying track module according to the specific embodiment of the present disclosure.

The present disclosure provides a sample loading and unloading system for a laboratory workflow, including a sample holder conveying track module and a sample tube loading and unloading module 7. The sample holder conveying track module includes a main track 3 and at least one auxiliary track 4 arranged side by side with the main track 3 and in communication with the main track. A distribution detection position 8 is arranged on the main track 3. An auxiliary detection position 11 and an entered sample scanning position 13 are sequentially arranged on the auxiliary track 4 along a conveying direction. A connection position between an input end of the auxiliary track 4 and the main track 3 is located downstream of the distribution detection position 8, and is provided with a diversion mechanism (a first diversion mechanism 9 shown in FIGS. 2 to 5) for changing a conveying direction of a sample holder. The sample tube loading and unloading module 7 includes a sample entering and leaving area 19 and an error area 6. The main track 3 is configured to convey vacant sample holders or sample holders carrying sample tubes.

Preferably, the sample holder conveying track module further includes a return track 2 for returning sample holders and a vacant holder return track 5 for conveying vacant sample holders. As shown in FIG. 1, the return track 2 is provided on one side of the main track 3 and has a conveying direction opposite to that of the main track 3, and the vacant holder return track 5 is located below the main track 3 and the return track 2.

It should be noted that the auxiliary track 4 in the present disclosure may be designed to extend in a straight direction or in a curved direction. Preferably, as shown in FIGS. 2 and 4, main body of the auxiliary track 4 in the present technical solution is a straight track, and the auxiliary track 4 is arranged in parallel at one side of the main track 3 and has the same conveying direction with the main track 3.

It should be noted that the input end of the auxiliary track 4 may be in communication with the main track 3 via a connecting track, so as to transfer sample holders from the main track 3 to the auxiliary track 4, and an output end of the auxiliary track 4 may also be in communication with the main track 3 via another connecting track, so as to transfer sample holders from the auxiliary track 4 to the main track 3. Preferably, as shown in FIGS. 4 and 5, a portion of the auxiliary track 4 located downstream of the entered sample scanning position 13 is an error sample holder track 22. One side of the error sample holder track 22 is in communication with the main track 3 via the another connecting track, and a diversion mechanism (a second diversion mechanism 23) is provided at a connection position between the error sample holder track 22 and the another connecting track.

Preferably, the error sample holder track 22 is provided with an error sample holder temporary storage position 24.

Preferably, the sample loading and unloading system for laboratory workflow further includes a sample tube transfer module 1 configured to transfer sample tubes between the sample holder conveying track module and the sample tube loading and unloading module 7. The sample tube transfer module 1 has a mechanical arm with multiple mechanical grippers configured to transfer the sample tubes between sample holders of the sample holder conveying track module and sample holders of the sample tube loading and unloading module 7.

Preferably, the distribution detection position 8 is provided with a sample holder position sensor and a sample holder information reader. The auxiliary detection position 11 is provided with a sample holder position sensor, a sample holder information reader, and a sample tube position sensor. The entered sample scanning position 13 is provided with a sample holder position sensor, a sample holder information reader, and a sample tube information reader 12.

Preferably, the main track 3 is provided with a main track buffer position 14 located between the input end and the output end of the auxiliary track 4, and the main track buffer position 14 is provided with a sample holder position sensor.

It should be noted that the sample holder position sensor is used to detect position of sample holders, the sample holder information reader is used to read and identify sample holder information, the sample tube position sensor is used to detect position of sample tubes, and the sample tube information reader is used to read and identify sample tube information. The sample holder position sensor and the sample tube position sensor may employ a position sensor such as an infrared position sensor or an ultrasonic position sensor, and the sample holder information reader and the sample tube information reader 12 may employ an information reading device such as an radio frequency identification (RFID) reader or a visual scanning device. In addition, the distribution detection position 8, the auxiliary detection position 11, the entered sample scanning position 13, and the main track buffer position 14 are each provided with a sample holder blocking device, which is used to realize blocking and releasing management of the sample holders during conveying. In the case that multiple sample holders are conveyed in succession, intermittent releasing function of the sample holders is able to be realized by intermittently turning on and off the sample holder blocking device.

Preferably, the entered sample scanning position 13 is provided with a sample holder rotating device 16. The sample holder rotating device 16 is used to press and rotate the sample holder after the sample holder has been blocked, to facilitate scanning or information reading of the sample tube information reader.

Preferably, the sample holder rotating device 16 includes at least one driving wheel and at least one driven wheel arranged in sequence along a circumferential direction of the sample holder and configured for rolling contact with a circumferential outer wall of the sample holder. The sample holder rotating device 16 further includes a rotation driving device for driving the driving wheel to rotate and a movement driving device for changing a position of the driving wheel and/or a position of the driven wheel relative to the auxiliary track 4. When a sample holder is blocked, the sample holder rotating device 16 makes the driving wheel and the driven wheel to get close to each other by the movement driving device, to clamp the sample holder. Subsequently, the rotation driving device is started to control the driving wheel to rotate, to realize rotation of the sample holder clamped by the driving wheel and the driven wheel together with the driving wheel and the driven wheel, so as to achieve the rotating operation to the sample holder. After the sample holder is rotated in position, the sample holder information is read by the sample holder information reader or the sample tube information is read by the sample tube information reader. Further preferably, the sample holder rotating device 16 includes at least two driving wheels and at least one driven wheel, and the sample holder is clamped by the three wheels, which further improves stability of the sample holder during rotation, and thereby improving operation reliability of the system.

Preferably, the sample entering and leaving area 19 is provided with at least one tray placement position for placing a sample tray, and the tray placement position is provided with a sample tray information detecting device. Specifically, the sample entering and leaving area 19 may include multiple drawable moving platforms, and each of the moving platforms may be provided with one or more tray placement positions, i.e., each of the moving platforms is able to carry one or more sample trays. The sample tray information detecting device is used to recognize and read coded information of the sample tray. The tray placement position may also be provided with a tray position sensor for detecting whether there is a sample tray.

Preferably, the error area 6 includes an error sample area 20 and a manual processing area 18. The error sample area 20 is configured to place a sample tube with abnormal sample information, and the manual processing area 18 may be configured to place a manually processed tube or expedited sample tube. In addition, an error sample holder temporary storage position 24 on the error sample holder track 22 is configured for temporary storage of an error sample holder.

Preferably, the diversion mechanism includes a blocking arm for restricting passage of the sample holder and a diversion driving component for driving the blocking arm to change position between two adjacent tracks. The diversion driving component drives the blocking arm to swing between the two adjacent tracks, thereby changing conveying direction of the sample holder.

Preferably, the main track 3 is provided with a position detecting device for sample holder release 15 located downstream of the output end of the auxiliary track 4;
and/or, the auxiliary track 4 is provided with a position detecting device for auxiliary track buffer occupation 21 located upstream of the auxiliary detection position 11;
and/or, the auxiliary track 4 is provided with a position detecting device for scanning position buffer occupation 17 located between the auxiliary detection position 11 and the entered sample scanning position 13.

The position detecting device for sample holder release 15 is configured to detect whether a downstream track section has sufficient space to accommodate a sample holder, i.e., whether downstream sample holders have accumulated to a predetermined distance. In the case that the downstream track section has sufficient space, the position detecting device for sample holder release 15 triggers the corresponding sample holder blocking device to release the sample holder. The position detecting device for auxiliary track buffer occupation 21 is configured to detect whether the auxiliary track 4 has sufficient space upstream of the auxiliary detection position 11 to accommodate the sample holder. The position detecting device for scanning position buffer occupation 17 is configured to detect whether the auxiliary track 4 has sufficient space between the auxiliary detection position 11 and the entered sample scanning position 13 to accommodate the sample holder. The above position detecting devices may employ a position sensor such as an ultrasonic position sensor or an infrared ultrasonic sensor.

Preferably, the main track 3 is provided with a main track buffer position 14 located between the input end and the output end of the auxiliary track 4, and a position detecting device for main track buffer occupation 10 between the input end of the auxiliary track 4 and the main track buffer position 14.

The operation principle of the sample loading and unloading system according to the present disclosure is as follows.

In a sample loading mode, the distribution detection position of the main track 3 detects each sample holder conveyed on the main track 3, and the system determines whether sample loading is required for each sample holder based on detection information of the distribution detection position 8. In the case that a sample holder does not require sample loading, the distribution detection position 8 directly releases the sample holder and the sample holder is conveyed to a next unit by the main track 3. In the case that a sample holder requires sample loading, the sample holder is conveyed to the auxiliary track 4 by the first diversion mechanism 9, where in the case that no sample tube is detected on the sample holder by the auxiliary detection position 11, i.e., the sample holder is vacant, a sample tube in the sample entering and leaving area 19 is transferred to the vacant sample holder; then, the auxiliary detection position 11 releases the sample holder and the sample holder is conveyed to the entered sample scanning position 13, which binds and uploads the scanned sample tube information with sample holder information, and then the sample holder is released, thus completing loading of the sample tube once.

In a sample unloading mode, the distribution detection position 8 detects each sample holder conveyed on the main track 3, and the system determines whether sample unloading is required for each sample holder based on detection information of the distribution detection position 8. In the case that a sample holder does not require sample unloading, the distribution detection position 8 directly releases the sample holder and the sample holder is conveyed to the next unit by the main track 3. In the case that a sample holder requires sample unloading, the sample holder is conveyed to the auxiliary track 4 by the first diversion mechanism 9, where in the case that a sample tube is detected on the sample holder by the auxiliary detection position 11, the sample tube is unbound from the sample holder and is transferred to the sample entering and leaving area 19; then, the auxiliary detection position 11 releases the sample holder and the sample holder is conveyed to the entered sample scanning position 13, and the sample holder is released by the entered sample scanning position 13 and conveyed to the next unit via the main track 3, thus completing unloading of the sample tube once.

In a retest loading mode, if a sample tube that has entered into the sample entering and leaving area 19 needs to enter the system again to be tested and analyzed, the sample tube may be placed onto a vacant sample holder in the entered sample scanning position 13. The entered sample scanning position 13 binds and uploads scanned sample tube information with scanned sample holder information, and then releases the sample holder carrying the sample tube to allow the sample tube to be conveyed to the next unit via the main track 3, thus completing sample tube retest loading once.

In an error sample processing mode, after a sample tube (or a retest sample tube) is loaded onto a vacant sample holder normally in the auxiliary detection position 11, when sample tube information is scanned and read by the entered sample scanning position 13, if information cannot be scanned or the scanned information does not correspond to experimental items, the system determines that the sample tube is an error information sample tube. In this case, the sample tube transfer module 1 transfers the error information sample tube to the error area 6 for manual processing, and the sample tube after manual processing is then operated in accordance with the above sample loading mode (or retest loading mode), thereby realizing normal sample loading (or normal retest loading). If the distribution detection position 8 fails to read the sample holder information or the read sample holder information is incorrect when the sample holder is conveyed to the distribution detection position 8 of the main track 3, the sample holder is conveyed to the auxiliary track 4 by the first diversion mechanism 9; in the case that the auxiliary detection position 11 and the entered sample scanning position 13 still fail to read the sample holder information or the read sample holder information is incorrect, the error sample holder is conveyed to the error sample holder track 22 by rotating the second diversion mechanism 23 and is temporarily stored at the error sample holder temporary storage position 24. Meanwhile, the system may also send an alert to facilitate timely manual processing of the error information sample holder. The error area 6 of the sample tube loading and unloading module may be used as a sample entering area for expedited sample holders, to facilitate loading processing of a small number of expedited sample holders.

In a sample loading and unloading integrated mode, the system may divide the sample entering and leaving area of the sample tube loading and unloading module into a sample entering area and a sample leaving area, where the sample entering area is used to place the sample tray carrying sample tubes and the sample leaving area is used to place a vacant sample tray. In this mode, when a sample holder is conveyed to the auxiliary detection position 11, if a vacant sample holder is detected by the auxiliary detection position 11, a sample tube in the sample entering area may be conveyed to the vacant sample holder, and the entered sample scanning position 13 binds and uploads sample tube information and sample holder information, thereby realizing loading of the sample tube. If a sample holder carrying a sample tube is detected by the auxiliary detection position 11, the system unbinds sample holder information from sample tube information and transfers the sample tube onto the sample tray in the sample leaving area, and the auxiliary detection position 11 releases the vacant sample holder, thereby completing unloading of the sample tube once. The vacant sample holder is temporarily stored between the auxiliary detection position 11 and the entered sample scanning position 13; if loading of the sample tube is required in this situation, it is only needed to transfer the sample tube from the sample entering area to the vacant sample holder, then the entered sample scanning position 13 binds and uploads the scanned sample tube information with the scanned sample holder information, and the sample holder is conveyed to the next unit by the main track 3, thus completing loading of the sample tube once.

The following beneficial effects are achieved according to the present disclosure.
(1) The sample loading and unloading system provided in the present solution may serve as a sample loading unit, a sample unloading unit, or an integrated sample loading and unloading unit for laboratory workflow, which can meet high-throughput and high-capacity processing requirements for large medical institutions, and also meet space-compact and low-cost requirements for small medical institutions.
(2) The main track 3 and the auxiliary track 4 of the sample holder conveying track module in the present solution are connected side by side, which can ensure that scheduling of the sample holder is not affected by the sample tube transfer module when multiple units are in parallel operation, so as to realize rapid input or output of sample tubes, which avoids frequent stopping of the main track 3, reduces waiting time of equipment, thereby enhancing equipment throughput of the whole system and improving operational efficiency.
(3) The sample tube loading and unloading module of the present solution is provided with the error area 6, which facilitates manual processing of error sample tubes, and may also serve as an expedited loading passage for expedited sample tubes, thereby improving sample transfer efficiency and space utilization rate.

Based on the above description of the disclosed embodiments, those skilled in the art can implement or use the present disclosure. It is obvious for those skilled in the art to make many modifications to these embodiments. The general principles defined herein may be applied to other embodiments without departing from the spirit or scope of the present disclosure. Therefore, the present disclosure is not limited to the embodiments described herein, but should be defined by the broadest scope consistent with the principle and novel features disclosed herein.

## Claims

1. A sample loading and unloading system for a laboratory workflow, comprising a sample holder conveying track module and a sample tube loading and unloading module, wherein
the sample holder conveying track module comprises a main track and at least one auxiliary track arranged side by side with the main track and in communication with the main track, the main track is provided with a distribution detection position, the auxiliary track is provided with an auxiliary detection position and an entered sample scanning position in sequence along a conveying direction, a connection position between an input end of the auxiliary track and the main track is located downstream of the distribution detection position and is provided with a diversion mechanism for changing the conveying direction of a sample holder; and
the sample tube loading and unloading module comprises a sample entering and leaving area and an error area.

2. The sample loading and unloading system for the laboratory workflow according to claim 1, wherein a portion of the auxiliary track located downstream of the entered sample scanning position is an error sample holder track, one side of the error sample holder track is in communication with the main track via a connecting track, and another diversion mechanism is arranged at a connection position between the error sample holder track and the connecting track.

3. The sample loading and unloading system for the laboratory workflow according to claim 2, wherein the error sample holder track is provided with an error sample holder temporary storage position.

4. The sample loading and unloading system for the laboratory workflow according to any one of claims 1 to 3, wherein the distribution detection position is provided with a sample holder position sensor and a sample holder information reader, the auxiliary detection position is provided with another sample holder position sensor, another sample holder information reader, and a sample tube position sensor, and the entered sample scanning position is provided with yet another sample holder position sensor, yet another sample holder information reader, and a sample tube information reader.

5. The sample loading and unloading system for the laboratory workflow according to any one of claims 1 to 3, wherein the main track is provided with a main track buffer position located between the input end and an output end of the auxiliary track, and the main track buffer position is provided with a sample holder position sensor.

6. The sample loading and unloading system for the laboratory workflow according to claim 1, wherein the entered sample scanning position is provided with a sample holder rotating device.

7. The sample loading and unloading system for the laboratory workflow according to claim 6, wherein
the sample holder rotating device comprises at least one driving wheel and at least one driven wheel arranged in sequence along a circumferential direction of the sample holder and configured for rolling contact with a circumferential outer wall of the sample holder; and
the sample holder rotating device further comprises a rotation driving device for driving the driving wheel to rotate and a movement driving device for changing a position of the driving wheel and/or a position of the driven wheel relative to the auxiliary track.

8. The sample loading and unloading system for the laboratory workflow according to claim 1, wherein the error area comprises an error sample area and a manual processing area.

9. The sample loading and unloading system for the laboratory workflow according to claim 1, wherein the sample entering and leaving area is provided with at least one tray placement position for placing a sample tray, and the tray placement position is provided with a sample tray information detecting device.

10. The sample loading and unloading system for the laboratory workflow according to claim 1, wherein the diversion mechanism comprises a blocking arm for restricting passage of the sample holder and a diversion driving component for driving the blocking arm to change position between two adjacent tracks.

11. The sample loading and unloading system for the laboratory workflow according to claim 1, wherein the auxiliary track is arranged at one side of the main track and is parallel to the main track, and a conveying direction of the auxiliary track is the same as that of the main track.

12. The sample loading and unloading system for the laboratory workflow according to claim 1, wherein the main track is provided with a position detecting device for sample holder release located downstream of an output end of the auxiliary track;
and/or, the auxiliary track is provided with a position detecting device for auxiliary track buffer occupation located upstream of the auxiliary detection position;
and/or, the auxiliary track is provided with a position detecting device for scanning position buffer occupation located between the auxiliary detection position and the entered sample scanning position.

13. The sample loading and unloading system for the laboratory workflow according to claim 12, wherein the main track is provided with a main track buffer position located between the input end and the output end of the auxiliary track, and a position detecting device for main track buffer occupation located between the input end of the auxiliary track and the main track buffer position.

14. The sample loading and unloading system for the laboratory workflow according to claim 1, wherein
the sample holder conveying track module further comprises a return track provided at one side of the main track and has a conveying direction opposite to that of the main track; and
the sample holder conveying track module further comprises a vacant holder return track located below the main track and configured to convey a vacant sample holder.

15. The sample loading and unloading system for the laboratory workflow according to claim 1, further comprising a sample tube transfer module configured to transfer a sample tube between the sample holder conveying track module and the sample tube loading and unloading module.
